# EUROPEAN PATENT SPECIFICATION

(11) **EP 2 512 164 B1**
(45) Date of publication and mention of the grant of the patent: **20.04.2016**
(21) Application number: 11780163.9
(22) Date of filing: 03.05.2011
(51) Int. Cl.: H04M 15/00, H04Q 3/00, H04W 4/00, H04W 4/24, H04W 8/06, H04W 8/12, H04W 8/26

(54) **METHOD AND SYSTEMS FOR REALIZING INTELLIGENT NETWORK SERVICE**
VERFAHREN UND SYSTEME ZUR AUSFÜHRUNG EINES INTELLIGENTEN NETZWERKDIENSTES
PROCÉDÉ ET SYSTÈMES PERMETTANT DE RÉALISER UN SERVICE DE RÉSEAU INTELLIGENT

(30) Priority: 09.08.2010 CN 201010248445
(43) Date of publication of application: 17.10.2012
(73) Proprietor: Huawei Technologies Co., Ltd., Longgang District Shenzhen, Guangdong 518129 (CN)
(72) Inventor: ZHOU, Weirong, Shenzhen Guangdong 518129 (CN)
(74) Representative: Schmitz, Alexander
(86) International application number: PCT/CN2011/073623
(87) International publication number: WO 2011/140942

(56) References cited:
- WO-A1-2004/084563
- WO-A2-2007/129315
- WO-A2-2008/017951
- WO-A2-2009/083628
- CN-A- 1 308 482
- CN-A- 101 540 984
- KR-A- 20090 028 141

## Description

### FIELD OF THE INVENTION

The present invention relates to the communications field, and in particular, to a method, a device and a system for implementing an intelligent network service.

### BACKGROUND OF THE INVENTION

The CAMEL (Customized Applications for Mobile network Enhanced Logic, customized applications for mobile network enhanced logic) 1 protocol is an earliest protocol of a mobile intelligent network and a most basic capability requirement of the mobile intelligent network, but only supports simple calling and called services such as number routing. Service capabilities such as accounting and subscriber announcement playing are only supported in CAMEL 2.

Generally, international roaming only supports the CAMEL 1 protocol, so a mobile subscriber can only use service capability of CAMEL 1 in the international roaming, and an intelligent network service, such as a Pre-Paid service, supported in a later version of CAMEL 1 protocol cannot be implemented in the international roaming.

Document WO 2007/129315 A2 discloses a client for inclusion in a mobile telephony apparatus barred from international roaming usage, to allow roaming operation thereof according to conditions determined at a home network, the client being configured with: an activation unit configured to switch said client between active and passive states, and a call control unit, operative in said active state, to communicate with a predetermined node at said home network, to facilitate control of said mobile telephony apparatus using said home network determined conditions. There is also provided a server component at the home network to support the client. The system allows CAMEL type services when a prepaid roaming user is roaming in a non-CAMEL enabled network, and even allows these services to be provided when the home network lacks CAMEL enablement.

Document WO 2009/083628 A2 discloses a system including mobile terminals with a SIM card designed to intercept outgoing call attempts and to generate a random number (RAND) for each intercepted outgoing call attempt in order to transmit same in a USSD request to an intelligent network node (IN-Pre) which generates a register containing the calling number and the called number, labeling same with the random number. The SIM card establishes the call to a destination number formed by a network prefix and the random number. The system also includes an intelligent network node belonging to the originating network (HPMN) with which the mobile terminal is connected from the visited network, which intelligent network node includes a credit control logic (CCL) for prepaid calls and a logic responsible for correlating the USSD request with an identifier for triggering the intelligent network at the random number supplied by the card.

### SUMMARY OF THE INVENTION

Embodiments of the present invention provide a method and systems for implementing an intelligent network service, so as to support the intelligent network service beyond CAMEL 1 capability in international roaming.
To achieve the above purpose, the embodiments of the present invention adopt technical solutions as follows.

An embodiment of the present invention provides a method for implementing an intelligent network service, comprising:
receiving an intelligent network service request triggered from a visited mobile switching centre, VMSC, of a mobile terminal;
after receiving the intelligent network service request triggered from the VMSC, determining whether the intelligent network service request is triggered in the international roaming; and if the intelligent network service request is not triggered in the international roaming, directly triggering the intelligent network service that the mobile terminal subscribes to;
if the intelligent network service request is triggered in international roaming, generating a temporary calling number for an international roaming call which is of the mobile terminal and at the VMSC, and saving a corresponding relationship between the temporary calling number and an actual called number in the international roaming call, wherein the temporary calling number comprises a country code of a home country of the mobile terminal;
returning the temporary calling number to the VMSC, so that the VMSC routes the international roaming call to a mobile switching centre in a home country of the mobile terminal according to the country code;
receiving the intelligent network service request triggered from the mobile switching centre in a home country for the temporary calling number; and
acquiring the actual called number according to the temporary calling number, and triggering an intelligent network service that the mobile terminal subscribes to with the actual called number.

An embodiment of the present invention further provides a system comprising an access service processing device, wherein the access service processing device comprises:
a first receiving unit, configured to receive an intelligent network service request for an international roaming call;
a generating unit, configured to: generate a temporary calling number for the international roaming call, wherein the temporary calling number comprises a country code of a home country of a mobile terminal; and save a corresponding relationship between the temporary calling number and an actual called number of the international roaming call;
a sending unit, configured to send the temporary calling number to a visited mobile switching centre, VMSC, of the mobile terminal, so that the VMSC routes the international roaming call to a mobile switching centre in a home country of the mobile terminal according to the country code;
a second receiving unit, configured to receive an intelligent network service request triggered from the mobile switching centre in a home country of the mobile terminal for the temporary calling number; and
a processing unit, configured to acquire the actual called number according to the temporary calling number, and trigger an intelligent network service that the mobile terminal subscribes to with the actual called number.

An embodiment of the present invention further provides a system comprising a service scheduling device, wherein the service scheduling device comprises:
a receiving unit, configured to receive an intelligent network service request triggered from a visited mobile switching centre, VMSC, of a mobile terminal, and after an access service processing device returns a temporary calling number to the VMSC, receive an intelligent network service request triggered from a mobile switching centre in a home country of the mobile terminal for the temporary calling number; and
a judgment unit, configured to judge whether the intelligent network service request triggered from the VMSC is triggered in the international roaming;
a scheduling unit, configured to: when the intelligent network service request triggered from the VMSC is triggered in international roaming, send the intelligent network service request triggered from the VMSC to the access service processing device, so that the access service processing device assigns a temporary calling number; and when the receiving unit receives the intelligent network service request for the temporary calling number, send the intelligent network service request for the temporary calling number to the access service processing device, so as to trigger an intelligent network service that the mobile terminal subscribes to with an actual called number corresponding to the temporary calling number;
the scheduling unit is further configured to directly send the intelligent network service request triggered from the VMSC to an intelligent network service processing device for processing the intelligent network service that the mobile terminal subscribes to when the intelligent network service request triggered from the VMSC is not triggered in the international roaming.

An embodiment of the present invention further provides a system for implementing an intelligent network service, comprising:
an intelligent network access platform, configured to: receive an intelligent network service request triggered from a visited mobile switching centre, VMSC, of a mobile terminal; determine whether the intelligent network service request is triggered in the international roaming; and if the intelligent network service request is not triggered in the international roaming, directly trigger the intelligent network service that the mobile terminal subscribes to; if the intelligent network service request is triggered in international roaming, generate a temporary calling number for an international roaming call which is initiated by the mobile terminal at the VMSC, and save a corresponding relationship between the temporary calling number and an actual called number of the international roaming call, wherein the temporary calling number includes a country code of a home country of the mobile terminal; return the temporary calling number to the VMSC, so that the VMSC routes the international roaming call to a mobile switching centre in a home country of the mobile terminal according to the country code; receive an intelligent network service request triggered from the mobile switching centre in a home country for the temporary calling number; acquire the actual called number according to the temporary calling number, and trigger the intelligent network service that the mobile terminal subscribes to with the actual called number; and
an intelligent network processing device, configured to provide the intelligent network service that the mobile terminal subscribes to for the mobile terminal according to triggering of the intelligent network access platform.

According to the method and the systems provided by the embodiments of the present invention, the temporary calling number is generated for the international roaming call, the international roaming call is routed to the home country of the mobile terminal, and the mobile switching centre in a home country triggers the intelligent network service, so that the subscriber may use the intelligent network service supported in a later version of the CAMEL 1 that the subscriber subscribes to in the home country.

### BRIEF DESCRIPTION OF THE DRAWINGS

To illustrate the technical solutions in the embodiments of the present invention or in the prior art clearer, the accompanying drawings required for describing the embodiments or the prior art are introduced below briefly.
FIG. 1 is a flow chart of a method for implementing an intelligent network service according to an embodiment of the present invention;
FIG. 2 is a structure diagram of an access service processing device according to an example of the present invention;
FIG. 3 is another structure diagram of an access service processing device according to an example of the present invention;
FIG. 4 is a structure diagram of a service scheduling device according to an example of the present invention;
FIG. 5 is another structure diagram of a service scheduling device according to an example of the present invention;
FIG. 6 is a schematic structure diagram of a system for implementing an intelligent network service according to an example of the present invention;
FIG. 7 is a schematic network diagram of a system for implementing an intelligent network service according to an embodiment of the present invention;
FIG. 8 is a schematic flow chart of a method for implementing an intelligent network service according to an embodiment of the present invention; and
FIG. 9 is another schematic flow chart of a method for implementing an intelligent network service according to an embodiment of the present invention.

### DETAILED DESCRIPTION OF THE EMBODIMENTS

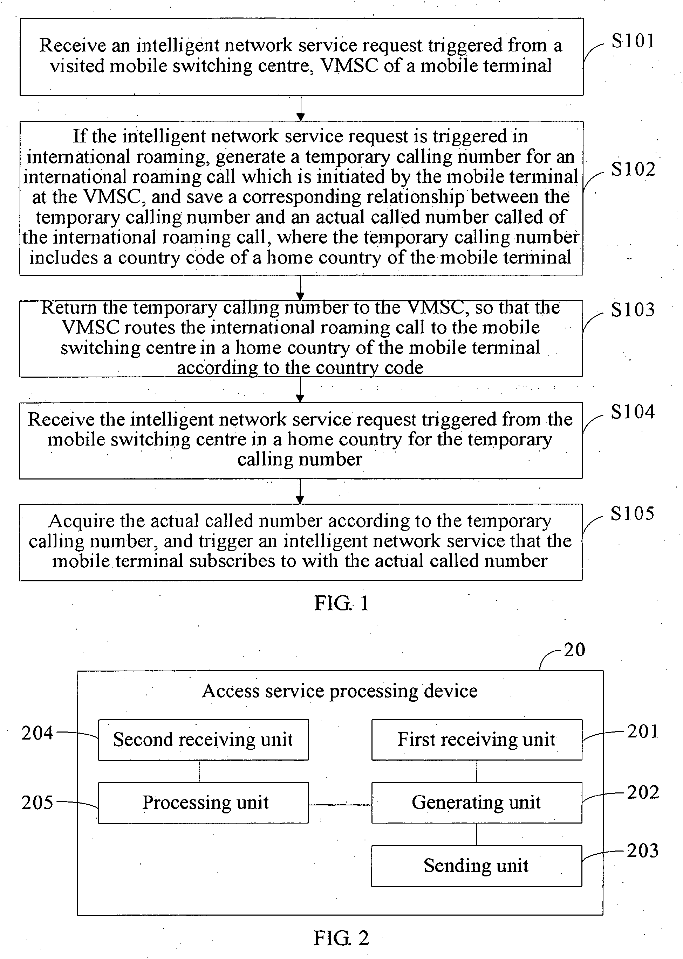

The technical solutions of the present invention are clearly and fully described in the following with reference to the accompanying drawings.
An embodiment of the present invention provides a method for implementing an intelligent network service. As shown in FIG. 1, the method includes the following steps.

S101: Receive an intelligent network service request triggered from a visited mobile switching centre, VMSC, of a mobile terminal.
When the mobile terminal has a call at a visited location (the having the call includes that the mobile terminal initiates the call as a calling party or the mobile terminal receives the call as a called party), if the mobile terminal has subscribed to the intelligent network service, the visited mobile switching centre, VMSC, of the mobile terminal triggers the intelligent network service according to subscription information of the mobile terminal, and sends the intelligent network service request to a home intelligent network access platform of the mobile terminal.
The intelligent network service request may be an initial detection point, IDP, message.

S102: If the intelligent network service request is triggered in international roaming, generate a temporary calling number for an international roaming call which is of the mobile terminal and at the VMSC, and save a corresponding relationship between the temporary calling number and an actual called number called in the international roaming, where the temporary calling number includes a country code of a home country of the mobile terminal.

Specifically, if the mobile terminal is in an international roaming state, a call of the mobile terminal is an international roaming call, and the intelligent network service request triggered from the VMSC where the mobile terminal is located is triggered in the international roaming. After receiving the intelligent network service request triggered from the VMSC, the intelligent network access platform may judge whether the intelligent network service request is triggered in the international roaming by identifying the VMSC.

For non-international roaming, the intelligent network access platform directly triggers the intelligent network service that the mobile terminal subscribes to, that is, the intelligent network access platform directly forwards the intelligent network service request triggered from the VMSC to an intelligent network processing device for processing the intelligent network service that the mobile terminal subscribes to.

For the international roaming, the intelligent network access platform generates the temporary calling number for the international roaming call, where the temporary calling number is unique and includes the country code of the home country. The unique temporary calling number is to ensure one-to-one mapping between the temporary calling number and actual called number of the call, and to ensure that the actual-called number can be found through the temporary calling number when re-triggering occurs. The temporary calling number includes the country code of the home country, so that after receiving the temporary number, the VMSC can route a call for the temporary number to a mobile switching centre in a home country according to the country code of the home country.

In the embodiment of the present invention, the temporary calling number may further include a special identifier, for example, a prefix for triggering the intelligent network. service added in the temporary calling number. The mobile switching centre in a home country triggers an intelligent network service request for the temporary calling number according to the special identifier.

S103: Return the temporary calling number to the VMSC, so that the VMSC routes the international roaming call to the mobile switching centre in a home country of the mobile terminal according to the country code.

The intelligent network access platform may return a call CONNECT message carrying the temporary calling number to the VMSC to instruct the VMSC to connect the call to the temporary calling number. The VMSC routes the call to the mobile switching centre in a home country of the mobile terminal according to the country code in the temporary calling number. Generally, the call is routed to a gateway mobile-services centre, GMSC (Gateway Mobile Switching Centre) of the home country of the mobile terminal.

S104: Receive the intelligent network service request triggered from the mobile switching centre in a home country for the temporary calling number.

S105: Acquire the actual called number according to the temporary calling number, and trigger the intelligent network service that the mobile terminal subscribes to with the actual called number.

The intelligent network access platform acquires the actual called number from the pre-saved corresponding relationship according to the temporary calling number, modifies the temporary calling number in the intelligent network service request triggered from the mobile switching centre in a home country for the temporary calling number to be the actual called number, sends the modified intelligent network service request to the intelligent network processing device for processing the intelligent network service that the mobile terminal subscribes to, and triggers the intelligent network service that the mobile terminal subscribes to.

In the embodiment, when the intelligent network service request is triggered in the international roaming, in S101 and S103, a message is sent through an international link. In the case that the international link only supports the CAMEL 1 protocol, the intelligent network service supported in a later version of the CAMEL 1 protocol cannot be triggered in S101. According to the embodiment of the present invention, the temporary calling number is generated for the international roaming call, so that the VMSC routes the international roaming call of the mobile terminal back to the home country. In S104, the mobile switching centre in a home country triggers the intelligent network service through a national link, so network capability (for example, the CAMEL 2/3/4 protocol) of the home country may be used to implement the intelligent network service supported in the later version of the CAMEL 1 protocol, such as, the Pre-Paid service.

In an example of the present invention, the intelligent network access platform may include a service scheduling device and an access service processing device. The service scheduling device and the access service processing device may be two separate physical entities or integrated into one physical entity. The service scheduling device is mainly configured to trigger the access intelligent network service, and assign the access intelligent network service to corresponding intelligent network service logic for processing. The access service processing device is mainly configured to process the access service logic of the international roaming call.

During the implementation of the method embodiment shown in FIG. 1, in S101, the access service processing device may receive the intelligent network service request triggered from the VMSC of the mobile terminal through the service scheduling device. The service scheduling device may first judge whether the intelligent network service request triggered from the VMSC is triggered in the international roaming. If the intelligent network service request triggered from the VMSC is triggered in the international roaming, the intelligent network service request is sent to the access service processing device for processing. If the intelligent network service request triggered from the VMSC is not triggered in the international roaming, the intelligent network service request is directly sent to the intelligent network processing device for processing the intelligent network service that the mobile terminal subscribes to. After receiving the intelligent network service request forwarded by the service scheduling device, the access service processing device performs S102, and in S103, the access service processing device returns the temporary calling number generated in S102 to the VMSC through the service scheduling device. In S104, the access service processing device receives the intelligent network service request triggered from the mobile switching centre in a home country of the mobile terminal for the temporary calling number through the service scheduling device. Then, in S105, the access service processing device acquires the actual called number from the pre-saved corresponding relationship according to the temporary calling number, and triggers the intelligent network service that the mobile terminal subscribes to with the actual called number.

A specific process of triggering the intelligent network service that the mobile terminal subscribes to with the actual called number may be as follows. The access service processing device directly modifies the temporary calling number in the intelligent network service request triggered from the mobile switching centre in a home country for the temporary calling number to be the actual called number, and sends the modified intelligent network service request to the intelligent network processing device for processing the intelligent network service that the mobile terminal subscribes to. Alternatively, the access service processing device delivers a call CONNECT message carrying the actual called number to the service scheduling device, and the service scheduling device intercepts the call CONNECT message, modifies the temporary calling number in the intelligent network service request triggered for the temporary calling number to be the actual called number, and sends the modified intelligent network service request to the intelligent network service processing device for processing the intelligent network service that the mobile terminal subscribes to.

Structures and functions of the access service processing device and the service scheduling device are described respectively in the following.
FIG. 2 is a structure diagram of an access service processing device according to an embodiment of the present invention. As shown in FIG. 2, in this embodiment, the access service processing device 20 may include:
a first receiving unit 201, configured to receive an intelligent network service request for an international roaming call;
a generating unit 202, configured to generate a temporary calling number for the international roaming call, where the temporary calling number includes a country code of a home country of a mobile terminal; and save a corresponding relationship between the temporary calling number and an actual called number of the international roaming call;
a sending unit 203, configured to send the temporary calling number to a visited mobile switching centre, VMSC, of the mobile terminal, so that the VMSC routes the international roaming call to a mobile switching centre in a home country of the mobile terminal according to the country code;
a second receiving unit 204, configured to receive an intelligent network service request triggered from the mobile switching centre in a home country of the mobile terminal for the temporary calling number; and
a processing unit 205, configured to acquire the actual called number according to the temporary calling number, and trigger an intelligent network service that the mobile terminal subscribes to with the actual called number.

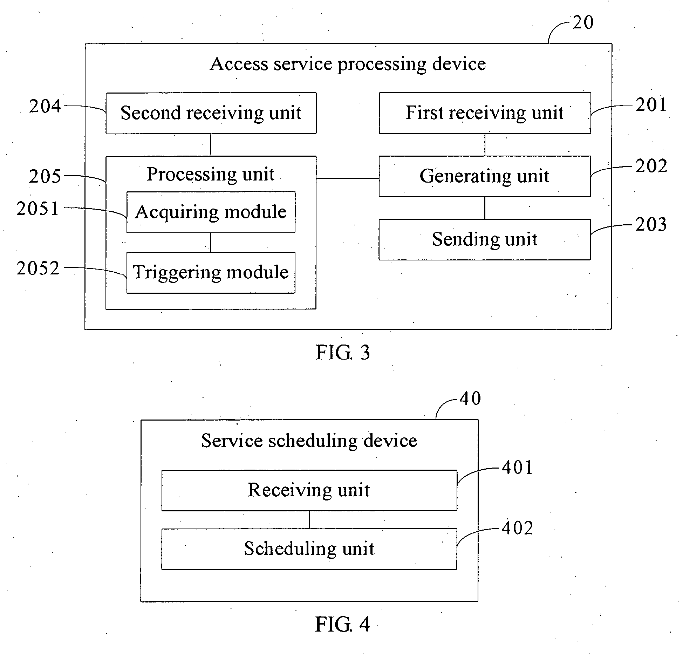

The first receiving unit 201 and the second receiving unit 204 receive the intelligent network service request for the international roaming call and the intelligent network service request triggered for the temporary calling number through a service scheduling device.
The processing unit 205 may trigger the intelligent network service that the actual called number subscribes to in two manners. As shown in FIG. 3, the processing unit 205 may specifically include an acquiring module 2051 and a triggering module 2052.

The acquiring module 2051 is configured to acquire the actual called number according to the temporary calling number.

The triggering module 2052 is configured to modify the temporary calling number in the intelligent network service request for the temporary calling number to be the actual called number, and send the modified intelligent network service request to an intelligent network service processing device for processing the intelligent network service that the mobile terminal subscribes to.

Alternatively, in another embodiment, the triggering module 2052 is configured to deliver a call CONNECT message carrying the actual called number to the service scheduling device. The service scheduling device modifies the temporary calling number in the intelligent network service request for the temporary calling number to be the actual called number, and sends the modified intelligent network service request to the intelligent network service processing device for processing the intelligent network service that the mobile terminal subscribes to.
For specific implementation of functions of the access service processing device 20, reference may be made to the method example, and the details are not described here again. FIG. 4 is a structure diagram of a service scheduling device according to an embodiment of the present invention. As shown in FIG. 4, in this embodiment, the service scheduling device 40 may include:
a receiving unit 401, configured to receive an intelligent network service request triggered from a visited mobile switching centre, VMSC, of a mobile terminal, and after an access service processing device returns a temporary calling number to the VMSC, receive an intelligent network service request triggered from a mobile switching centre in a home country of the mobile terminal for the temporary calling number; and
a scheduling unit 402, configured to: when the intelligent network service request triggered from the VMSC is triggered in international roaming, send the intelligent network service request triggered from the VMSC to the access service processing device, so that the access service processing device assigns a temporary number; and when the receiving unit 401 receives the intelligent network service request for the temporary calling number, send the intelligent network service request for the temporary calling number to the access service processing device, so as to trigger an intelligent network service that the mobile terminal subscribes to with an actual called number corresponding to the temporary calling number.

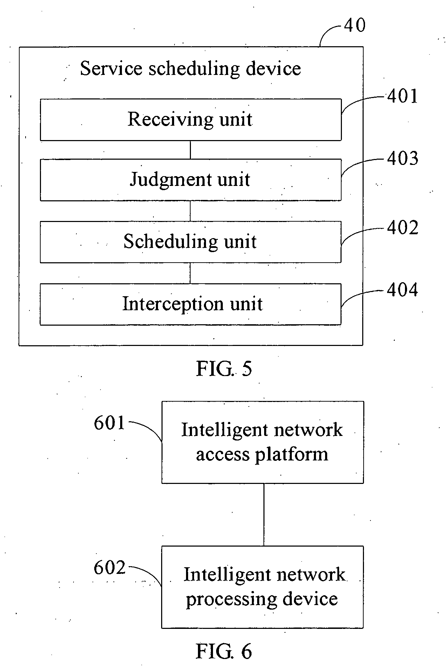

Further, the service scheduling device 40 in the embodiment of the present invention may also send an intelligent network service request triggered in non-international roaming to an intelligent network service processing device for processing the intelligent network service that the mobile terminal subscribes to. As shown in FIG. 5, the service scheduling device 40 may further include :
a judgment unit 403, configured to judge whether the intelligent network service request triggered from the VMSC is triggered in the international roaming.

The scheduling unit 402 is further configured to: when the intelligent network service request triggered from the VMSC is not triggered in the international roaming, directly send the intelligent network service request triggered from the VMSC to the intelligent network service processing device for processing the intelligent network service that the mobile terminal subscribes to.

In addition, when a solution that the service scheduling device 40 modifies the intelligent network service request for the temporary calling number is adopted, the service scheduling device 40 may further include:
an interception unit 404, configured to intercept a call CONNECT message carrying the actual called number delivered by the access service processing device when the access service processing device receives the intelligent network service request for the temporary calling number.
The scheduling unit 402 is further configured to modify the temporary calling number in the intelligent network service request for the temporary calling number to be the actual called number, and send the modified intelligent network service request to the intelligent network service processing device for processing the intelligent network service that the actual called number subscribes to.

For specific implementation of functions of the service scheduling device 40, reference may be made to the method example, and the details are not described here again.
According to the embodiment of the present invention, the access service processing device is added to implement access service logic of the intelligent network service of an international roaming call, and the service scheduling device is added to implement the scheduling of the service logic. For example, the access service logic is scheduled for the international roaming call, and logic of the intelligent network service that the mobile terminal subscribes to is scheduled for a non-international roaming call. The intelligent network service triggered in a roaming country is trigged in the home country in a roundabout way, thereby providing a subscriber with intelligent network service capability of the home country.

The service scheduling device, the access service scheduling device and the intelligent network processing device may be service control points, SCPs, separately or functional components located in one SCP. The service scheduling device and the access service scheduling device construct the intelligent network access platform that is responsible for accessing the intelligent network service, and the intelligent network processing device is responsible for providing the intelligent network service that the mobile terminal subscribes to. FIG. 6 shows a structure of an intelligent network service system according to an example of the present invention. The system includes:
an intelligent network access platform 601, configured to: receive an intelligent network service request triggered from a visited mobile switching centre, VMSC, of a mobile terminal; if the intelligent network service request is triggered in international roaming, generate a temporary calling number for an international roaming call which is initiated by the mobile terminal at the VMSC, and save a corresponding relationship between the temporary calling number and an actual called number of the international roaming call, where the temporary calling number includes a country code of a home country of the mobile terminal; return the temporary calling number to the VMSC, so that the VMSC routes the international roaming call to a mobile switching centre in a home country of the mobile terminal according to the country code; receive an intelligent network service request triggered from the mobile switching centre in a home country for the temporary calling number; acquire the actual called number according to the temporary calling number, and trigger an intelligent network service that the mobile terminal subscribes to with the actual called number; and
an intelligent network processing device 602, configured to provide the intelligent network service that the mobile terminal subscribes to for the mobile terminal according to triggering of the intelligent network access platform 601.

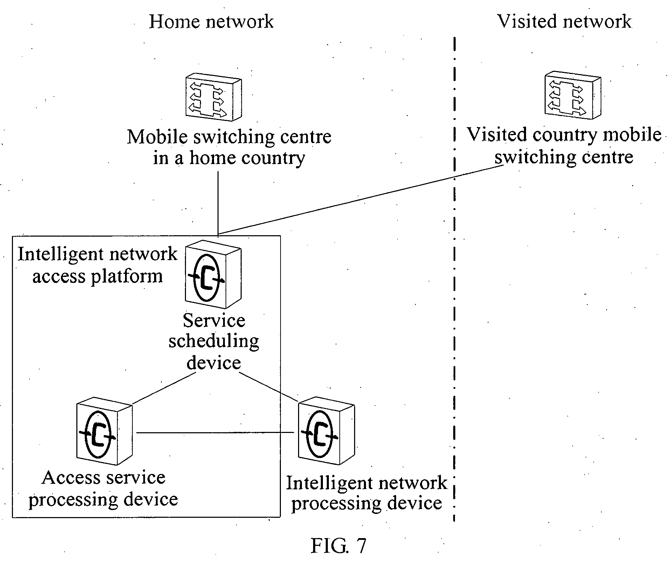

In a specific international roaming call scenario, in addition to the intelligent network access platform and the intelligent network processing device, the whole network further involves the mobile switching centre in a home country and the visited mobile switching centre, VMSC, of the mobile terminal. FIG. 7 is a network structure diagram of an international roaming call. In FIG. 7, on the left of the dash dot line is a home country network, and on the right of the dash dot line is a visited country network. In the home country network, an intelligent network access platform and an intelligent network processing device both may be services control points (Service Control Points, SCPs), and a national link exists between the mobile switching centre in a home country and the intelligent network access platform and generally adopts a later version of the CAMEL 1 protocol, for example, the CAMEL 2/3/4 protocol. An international link exists between a VMSC and the intelligent network access platform and generally supports the CAMEL 1 protocol only.
The intelligent network access platform, the intelligent network processing device and the mobile switching centre in a home country construct an intelligent network service system of a home country of a mobile terminal. The intelligent network access platform includes an access service processing device and a service scheduling device, and functions and structures of the intelligent network access platform are described in the foregoing embodiment and are not be described here again.

When the VMSC receives a call of the mobile terminal (including an incoming call or an outgoing call), if the mobile terminal subscribes to an intelligent network service, the VMSC triggers the intelligent network service of the home country of the mobile terminal, that is, the VMSC sends an intelligent network service request to the intelligent network access platform of the home country of the mobile terminal, and when receiving a CONNECT message carrying a temporary calling number returned by the intelligent network access platform, the VMSC routes the call to a mobile switching centre in a home country of the mobile terminal according to a country code in the temporary calling number.

The mobile switching centre in a home country is configured to: receive the international roaming call routed by the VMSC according to the country code in the temporary calling number, where the temporary calling number further includes a special identifier; and send the intelligent network service request for the temporary calling number to the intelligent network access platform according to the special identifier.

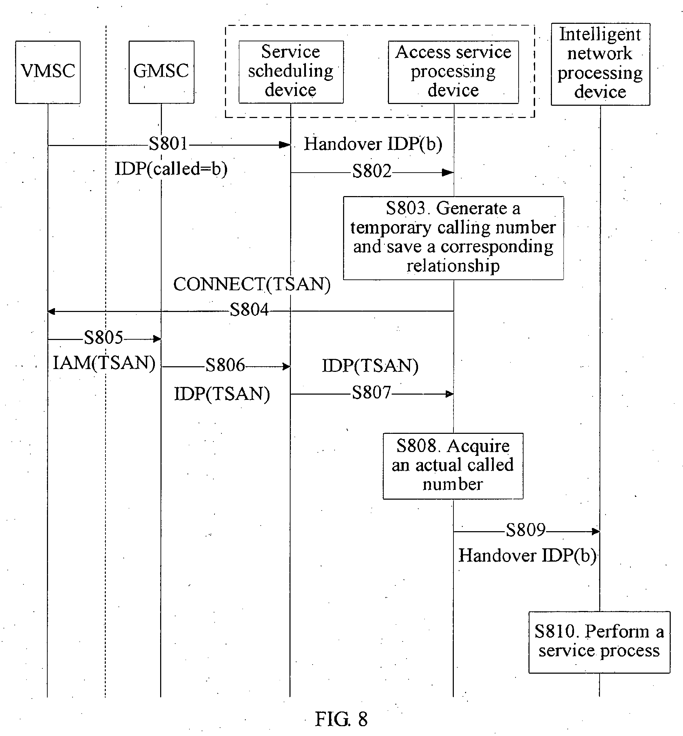

The embodiment of the present invention is further described in the following in national call and international roaming scenarios, and the embodiments below take a mobile terminal as a calling party as an example.
A. Scenario that a subscriber is in the home country:
   1. The mobile terminal initiates a national call, and a VMSC of the mobile terminal sends an intelligent network service request to a service scheduling device according to subscription information of the mobile terminal for triggering an intelligent network service.
   2. The service scheduling device judges where the intelligent network service request is triggered. If it is judged that the intelligent network service request is triggered in the home country, the service scheduling device directly triggers the intelligent network service that the mobile terminal subscribes to. An intelligent network processing device performs a normal service process. For example, for a Pre-Paid service, the normal service process includes calculating a charge, sending an accounting application, and connecting a call. After the call ends, the normal service process further includes receiving an accounting report, deducting the charge, and writing a bill.
   For the scenario that the subscriber is in the home country, differences from the prior art are that, in the embodiment of the present invention, after receiving the intelligent network service request, the service scheduling device needs to judge where the intelligent network service request is triggered, and only when it is judged that the intelligent network service request is triggered in the home country, the service scheduling device triggers the intelligent network service that the mobile terminal subscribes to.
B. Scenario that a subscriber in international roaming:
   As shown in FIG. 8, an international roaming call method provided by this embodiment includes the following.

S801: The subscriber in international roaming initiates a call at a VMSC, and the VMSC sends an intelligent network service request (for example, an initial detection point, IDP, message) to a service scheduling device of a home country of a mobile terminal of the subscriber, where the IDP message, the intelligent network service request, carries a called number of the call. Processes for the subscriber to initiate the call at the VMSC and query a HLR of the mobile terminal about whether the mobile terminal subscribes to an intelligent network service is the prior art, and is omitted and not shown in FIG. 8

S802: After judging that the triggered call is an international roaming call, the service scheduling device hands over the IDP message to an access service processing device. The service scheduling device may judge whether the call is the international. roaming call by identifying the VMSC.

Here, a difference from a national call exists. After receiving the national call, the service scheduling device triggers a corresponding intelligent network processing device according to subscription information of a calling terminal. However, in the present invention, after judging that the call is the international roaming call, the service scheduling device triggers the access service processing device.

S803: The access service processing device generates a temporary calling number for the international roaming call, where the temporary calling number includes a country code of the home country and a special identifier. The access service processing device saves a corresponding relationship between the temporary calling number and an actual called number of the international roaming call.

Access service logic is stored in the access service processing device, and when receiving the IDP message, the access service processing device executes the access service logic and performs step 803.

S804: The access service processing device returns a call CONNECT message carrying the temporary calling number to the VMSC, where the called number in the CONNECT message is filled with the temporary calling number.

S805: The VMSC routes the call for the temporary calling number to a mobile switching centre, GMSC (Gateway Mobile-services Switching Centre) of the home country according to the country code of the home country in the temporary calling number.

In international roaming, a roaming country and the home country generally belong to different networks. In the case of cross-network, a mobile switching centre in a home country for receiving the call is the gateway mobile switching centre, GMSC (Gateway Mobile Switching Centre) of the home country.

S806: The GMSC triggers the service scheduling device according to the special identifier of the temporary calling number. The special identifier is used to trigger the intelligent network service. A function of the special identifier is similar to that of the CAMEL subscription information, CSI (CAMEL-Subscription-Information). The special identifier may be carried in the temporary calling number as a prefix.

S807: After judging that the intelligent network service is triggered with the temporary calling number, the service scheduling device hands over the IDP message to the access service processing device.

S808: The access service processing device acquires the actual called number according to the corresponding relationship between the temporary calling number and the actual called number.

S809: The access service processing device modifies the called number in the IDP message to be the actual called number and hands over the modified IDP message to the intelligent network processing device.

The access service processing device triggers the intelligent network service that the mobile terminal subscribes to through S809.

S810: The intelligent network processing device performs a normal service process, that is, a process for processing the intelligent network service that the mobile terminal subscribes to. For a Pre-Paid service, the normal service process includes calculating a charge, sending an accounting application, and connecting a call. After the call ends, the normal service process further includes receiving an accounting report, deducting the charge, and writing a bill.

According to the solution provided by the embodiment of the present invention, the international link supporting the capability of a later version of the CAMEL 1 protocol does not need to be developed separately, and only the service scheduling device and the access service processing device need to be added, so that an original intelligent network service of the mobile terminal remains the same, thereby saving office investments and keeping upgrade smooth.

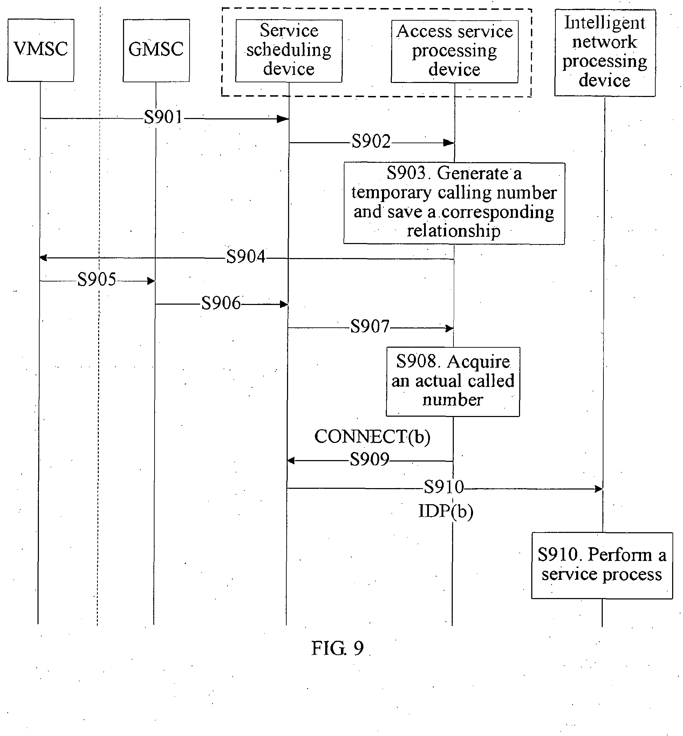

FIG. 9 is a flow chart of calling for a subscriber in international roaming according to another embodiment of the present invention. According to this embodiment, S901 to S908 are similar to S801 to S808 in the embodiment shown in FIG. 8 and are not described here again. A difference from the embodiment shown in FIG. 8 is a flow of an access service processing device triggering an intelligent network service that a mobile terminal subscribes to. A triggering process in this embodiment is shown in S909 to S910.

S909: The access service processing device delivers a call CONNECT message for connecting an actual called party to a GMSC.

S910: A service scheduling device intercepts the call CONNECT message delivered by the access service processing device, extracts an actual called number from the call CONNECT message, modifies the temporary calling number in the IDP message received in S907 to be the actual called number, and hands over the modified IDP message to an intelligent network processing device.

S911: The intelligent network processing device performs a normal service process. For a Pre-Paid service, the normal service process includes calculating a charge, sending an accounting application, and connecting a call. After the call ends, the normal service process further includes receiving an accounting report, deducting the charge, and writing a bill.

In this embodiment, the service scheduling device and the access service processing device construct an intelligent network access platform and both may be SCPs in a network.

According to the method for implementing the intelligent network service provided by the embodiment of the present invention, the intelligent network service request triggered from the VMSC is received; after it is judged that the intelligent network service request is triggered in the international roaming, the temporary calling number is generated for the international roaming call initiated at the VMSC, and the corresponding relationship between the temporary calling number and the actual called number of the international roaming call is saved; the temporary calling number is returned to the VMSC, so that the VMSC routes the international roaming call to the home country of the mobile terminal. By now, the existing CAMEL 1 protocol is used. Then, a later version of the CAMEL 1 protocol is used to receive the call for the temporary calling number from the mobile switching centre in a home country, acquire the actual called number according to the temporary calling number, and trigger the corresponding intelligent network service through the mobile switching centre in a home country. Therefore, in the case of international roaming, the subscriber can use the intelligent network service supported in the later version of the CAMEL 1 protocol that the subscriber subscribes to in the home country. In this way, without changes of the existing network service architecture, the intelligent network service processing for the international roaming call is implemented, and the subscriber in international roaming can also use the intelligent network service, thereby providing convenience for the subscriber and improving subscriber experience.

According to an example of the present invention, the temporary calling number is generated for the international roaming call; the international roaming call is routed to the home country of the mobile terminal; and the mobile switching centre in a home country triggers the intelligent network service, so that the subscriber in international roaming can use the intelligent network service supported in the later version of the CAMEL 1 protocol that the subscriber subscribes to in the home country.

In addition, according to the solution provided by an example of the present invention, the international link supporting capability of the later version of the CAMEL 1 protocol does not need to be developed separately, and only the service scheduling device and the access service processing device need to be added, so that an original intelligent network service of the mobile terminal remains the same, thereby saving investments and keeping upgrade smooth.

Persons of ordinary skill in the art may understand that all or a part of the steps in the method according to the embodiments of the present invention may be implemented by a program instructing relevant hardware, and the program may be stored in a computer readable storage medium. When the program is run, all or a part of the steps of the method according to the embodiments of the present invention are performed. The storage medium includes a ROM, a RAM, a magnetic disk, or an optical disk.

## Claims

1. A method for implementing an intelligent network service, comprising:
receiving (S101) an intelligent network service request triggered from a visited mobile switching centre, VMSC, of a mobile terminal;
after receiving the intelligent network service request triggered from the VMSC, determining whether the intelligent network service request is triggered in the international roaming; and if the intelligent network service request is not triggered in the international roaming, directly triggering the intelligent network service that the mobile terminal subscribes to;
if the intelligent network service request is triggered in international roaming, generating (S102) a temporary calling number for an international roaming call which is of the mobile terminal and at the VMSC, and saving a corresponding relationship between the temporary calling number and an actual called number in the international roaming call, wherein the temporary calling number comprises a country code of a home country of the mobile terminal;
returning (S103) the temporary calling number to the VMSC, so that the VMSC routes the international roaming call to a mobile switching centre in a home country of the mobile terminal according to the country code;
receiving (S104) the intelligent network service request triggered from the mobile switching centre in a home country for the temporary calling number; and
acquiring (S105) the actual called number according to the temporary calling number, and triggering an intelligent network service that the mobile terminal subscribes to with the actual called number.

2. The method according to claim 1, wherein the temporary calling number further comprises a special identifier, and the mobile switching centre in a home country triggers an intelligent network service request for the temporary calling number according to the special identifier.

3. The method according to claim 1 or 2, wherein the triggering the intelligent network service that the mobile terminal subscribes to with the actual called number specifically comprises:
modifying the temporary calling number in the intelligent network service request triggered from the mobile switching centre in a home country to be the actual called number, and sending the modified intelligent network service request to an intelligent network service processing device for processing the intelligent network service that the mobile terminal subscribes to.

4. A system comprising an access service processing device (20), wherein the access service processing device (20) comprises:
a first receiving unit (201), configured to receive an intelligent network service request for an international roaming call;
a generating unit (202), configured to: generate a temporary calling number for the international roaming call, wherein the temporary calling number comprises a country code of a home country of a mobile terminal; and save a corresponding relationship between the temporary calling number and an actual called number of the international roaming call;
a sending unit (203), configured to send the temporary calling number to a visited mobile switching centre, VMSC, of the mobile terminal, so that the VMSC routes the international roaming call to a mobile switching centre in a home country of the mobile terminal according to the country code;
a second receiving unit (204), configured to receive an intelligent network service request triggered from the mobile switching centre in a home country of the mobile terminal for the temporary calling number; and
a processing unit (205), configured to acquire the actual called number according to the temporary calling number, and trigger an intelligent network service that the mobile terminal subscribes to with the actual called number.

5. The access service processing device according to claim 4, wherein the processing unit specifically comprises:
an acquiring module (2051), configured to acquire the actual called number according to the temporary calling number; and
a triggering module (2052), configured to modify the temporary calling number in the intelligent network service request for the temporary calling number to be the actual called number, and send the modified intelligent network service request to an intelligent network service processing device for processing the intelligent network service that the mobile terminal subscribes to.

6. The access service processing device according to claim 4, wherein the processing unit specifically comprises:
an acquiring module (2051), configured to acquire the actual called number according to the temporary calling number; and
a triggering module (2052), configured to deliver a call CONNECT message carrying the actual called number to a service scheduling device, so that the service scheduling device modifies the temporary calling number in the intelligent network service request for the temporary calling number to be the actual called number, and sends the modified intelligent network service request to an intelligent network service processing device for processing the intelligent network service that the mobile terminal subscribes to.

7. A system comprising at service scheduling device (40), wherein the service scheduling device (40) comprises:
a receiving unit (401), configured to receive an intelligent network service request triggered from a visited mobile switching centre, VMSC, of a mobile terminal, and after an access service processing device returns a temporary calling number to the VMSC, receive an intelligent network service request triggered from a mobile switching centre in a home country of the mobile terminal for the temporary calling number; and
a judgment unit (403), configured to judge whether the intelligent network service request triggered from the VMSC is triggered in the international roaming;
a scheduling unit (402), configured to: when the intelligent network service request triggered from the VMSC is triggered in international roaming, send the intelligent network service request triggered from the VMSC to the access service processing device, so that the access service processing device assigns a temporary calling number; and when the receiving unit receives the intelligent network service request for the temporary calling number, send the intelligent network service request for the temporary calling number to the access service processing device, so as to trigger an intelligent network service that the mobile terminal subscribes to with an actual called number corresponding to the temporary calling number;
the scheduling unit is further configured to directly send the intelligent network service request triggered from the VMSC to an intelligent network service processing device for processing the intelligent network service that the mobile terminal subscribes to when the intelligent network service request triggered from the VMSC is not triggered in the international roaming.

8. The service scheduling device according to claim7, further comprising:
an interception unit (404), configured to intercept a call CONNECT message carrying the actual called number delivered by the access service processing device when the access service processing device receives the intelligent-network service request for the temporary calling number, wherein
the scheduling unit is further configured to modify the temporary calling number in the intelligent network service request for the temporary calling number to be the actual called number, and send the modified intelligent network service request to the intelligent network service processing device for processing the intelligent network service that the mobile terminal subscribes to.

9. A system for implementing an intelligent network service, comprising:
an intelligent network access platform (601), configured to: receive an intelligent network service request triggered from a visited mobile switching centre, VMSC, of a mobile terminal; determine whether the intelligent network service request is triggered in the international roaming; and if the intelligent network service request is not triggered in the international roaming, directly trigger the intelligent network service that the mobile terminal subscribes to; if the intelligent network service request is triggered in international roaming, generate a temporary calling number for an international roaming call which is initiated by the mobile terminal at the VMSC, and save a corresponding relationship between the temporary calling number and an actual called number of the international roaming call, wherein the temporary calling number comprises a country code of a home country of the mobile terminal; return the temporary calling number to the VMSC, so that the VMSC routes the international roaming call to a mobile switching centre in a home country of the mobile terminal according to the country code; receive an intelligent network service request triggered from the mobile switching centre in a home country for the temporary calling number; acquire the actual called number according to the temporary calling number, and trigger the intelligent network service that the mobile terminal subscribes to with the actual called number; and
an intelligent network processing device (602), configured to provide the intelligent network service that the mobile terminal subscribes to for the mobile terminal according to triggering of the intelligent network access platform.

10. The system according to claim 9, further comprising:
the mobile switching centre in a home country, configured to: receive the international roaming call routed by the VMSC according to the country code in the temporary calling number, wherein the temporary calling number further comprises a special identifier; and trigger the intelligent network service request for the temporary calling number and send the intelligent network service request to the intelligent network access platform according to the special identifier.

## Patentansprüche

1. Verfahren zum Realisieren eines intelligenten Netzwerkdienstes, umfassend:
Empfangen (S101) einer Anforderung eines intelligenten Netzwerkdienstes, die von einer besuchten Mobilfunk-Schaltzentrale, Visited Mobile Switching Centre, VMSC, eines mobilen Endgeräts ausgelöst ist;
Bestimmen nach dem Empfangen der von der VMSC ausgelösten Anforderung des intelligenten Netzwerkdienstes, ob die Anforderung des intelligenten Netzwerkdienstes im internationalen Roaming ausgelöst ist; und wenn die Anforderung des intelligenten Netzwerkdienstes nicht im internationalen Roaming ausgelöst ist, direktes Auslösen des intelligenten Netzwerkdienstes, an dem das mobile Endgerät teilnimmt;
Erzeugen (S102) einer temporären Rufnummer für einen internationalen Roaming-Ruf, welcher von dem mobilen Endgerät stammt und an der VMSC erfolgt, wenn die Anforderung des intelligenten Netzwerkdienstes im internationalen Roaming ausgelöst ist, und Speichern einer entsprechenden Beziehung zwischen der temporären Rufnummer und einer tatsächlich gewählten Nummer in dem internationalen Roaming-Ruf, wobei die temporäre Rufnummer einen Länder-Code eines Heimatlandes des mobilen Endgeräts umfasst;
Zurücksenden (S103) der temporären Rufnummer an die VMSC, so dass die VMSC den internationalen Roaming-Ruf gemäß dem Länder-Code an eine Mobilfunk-Schaltzentrale in einem Heimatland des mobilen Endgeräts weiterleitet;
Empfangen (S104) der von der Mobilfunk-Schaltzentrale in einem Heimatland ausgelösten Anforderung des intelligenten Netzwerkdienstes für die temporäre Rufnummer und
Erfassen (S105) der tatsächlich gewählten Nummer gemäß der temporären Rufnummer und Auslösen eines intelligenten Netzwerkdienstes, an welchem das mobile Endgerät teilnimmt, mit der tatsächlich gewählten Nummer.

2. Verfahren nach Anspruch 1, wobei die temporäre Rufnummer ferner eine spezielle Kennung umfasst und die Mobilfunk-Schaltzentrale in einem Heimatland eine Anforderung eines intelligenten Netzwerkdienstes für die temporäre Rufnummer gemäß der speziellen Kennung auslöst.

3. Verfahren nach Anspruch 1 oder 2, wobei das Auslösen des intelligenten Netzwerkdienstes, an dem das mobile Endgerät teilnimmt, mit der tatsächlich gewählten Nummer speziell umfasst:
Modifizieren der temporären Rufnummer in der Anforderung des intelligenten Netzwerkdienstes, die von der Mobilfunk-Schaltzentrale in einem Heimatland ausgelöst wird, so dass sie die tatsächlich gewählte Nummer ist, und Senden der modifizierten Anforderung des intelligenten Netzwerkdienstes an eine Verarbeitungsvorrichtung für intelligente Netzwerkdienste zum Verarbeiten des intelligenten Netzwerkdienstes, an dem das mobile Endgerät teilnimmt.

4. System, umfassend eine Zugriffsdienst-Verarbeitungsvorrichtung (20), wobei die Zugriffsdienst-Verarbeitungsvorrichtung (20) umfasst:
eine erste Empfangseinheit (201), welche dafür konfiguriert ist, eine Anforderung eines intelligenten Netzwerkdienstes für einen internationalen Roaming-Ruf zu empfangen;
eine Erzeugungseinheit (202), welche für Folgendes konfiguriert ist: Erzeugen einer temporären Rufnummer für den internationalen Roaming-Ruf, wobei die temporäre Rufnummer einen Länder-Code eines Heimatlandes eines mobilen Endgeräts umfasst; und Speichern einer entsprechenden Beziehung zwischen der temporären Rufnummer und einer tatsächlich gewählten Nummer des internationalen Roaming-Rufs;
eine Sendeeinheit (203), welche dafür konfiguriert ist, die temporäre Rufnummer an eine besuchte Mobilfunk-Schaltzentrale, VMSC, des mobilen Endgeräts zu senden, so dass die VMSC den internationalen Roaming-Ruf gemäß dem Länder-Code an eine Mobilfunk-Schaltzentrale in einem Heimatland des mobilen Endgeräts weiterleitet;
eine zweite Empfangseinheit (204), welche dafür konfiguriert ist, eine Anforderung eines intelligenten Netzwerkdienstes, die von der Mobilfunk-Schaltzentrale in einem Heimatland des mobilen Endgeräts ausgelöst ist, für die temporäre Rufnummer zu empfangen; und
eine Verarbeitungseinheit (205), welche dafür konfiguriert ist, die tatsächlich gewählte Nummer gemäß der temporären Rufnummer zu erfassen und mit der tatsächlich gewählten Nummer einen intelligenten Netzwerkdienst auszulösen, an welchem das mobile Endgerät teilnimmt.

5. Zugriffsdienst-Verarbeitungsvorrichtung nach Anspruch 4, wobei die Verarbeitungseinheit speziell umfasst:
ein Erfassungsmodul (2051), welches dafür konfiguriert ist, die tatsächlich gewählte Nummer gemäß der temporären Rufnummer zu erfassen; und
ein Auslösungsmodul (2052), welches dafür konfiguriert ist, die temporäre Rufnummer in der Anforderung des intelligenten Netzwerkdienstes für die temporäre Rufnummer so zu modifizieren, dass sie die tatsächlich gewählte Nummer ist, und die modifizierte Anforderung des intelligenten Netzwerkdienstes zum Verarbeiten des intelligenten Netzwerkdienstes, an dem das mobile Endgerät teilnimmt, an eine Verarbeitungsvorrichtung für intelligente Netzwerkdienste zu senden.

6. Zugriffsdienst-Verarbeitungsvorrichtung nach Anspruch 4, wobei die Verarbeitungseinheit speziell umfasst:
ein Erfassungsmodul (2051), welches dafür konfiguriert ist, die tatsächlich gewählte Nummer gemäß der temporären Rufnummer zu erfassen; und
ein Auslösungsmodul (2052), welches dafür konfiguriert ist, eine Ruf-VERBINDEN-Meldung, welche die tatsächlich gewählte Nummer enthält, an eine Dienstplanungsvorrichtung zu übermitteln, so dass die Dienstplanungsvorrichtung die temporäre Rufnummer in der Anforderung des intelligenten Netzwerkdienstes für die temporäre Rufnummer so modifiziert, dass sie die tatsächlich gewählte Nummer ist, und die modifizierte Anforderung des intelligenten Netzwerkdienstes zum Verarbeiten des intelligenten Netzwerkdienstes, an dem das mobile Endgerät teilnimmt, an eine Verarbeitungsvorrichtung für intelligente Netzwerkdienste sendet.

7. System, umfassend eine Dienstplanungsvorrichtung (40), wobei die Dienstplanungsvorrichtung (40) umfasst:
eine Empfangseinheit (401), welche dafür konfiguriert ist, eine Anforderung eines intelligenten Netzwerkdienstes zu empfangen, die von einer besuchten Mobilfunk-Schaltzentrale, VMSC, eines mobilen Endgeräts ausgelöst ist, und nachdem eine Zugriffsdienst-Verarbeitungsvorrichtung eine temporäre Rufnummer an die VMSC zurücksendet, eine Anforderung eines intelligenten Netzwerkdienstes für die temporäre Rufnummer zu empfangen, die von einer Mobilfunk-Schaltzentrale in einem Heimatland des mobilen Endgeräts ausgelöst ist; und
eine Entscheidungseinheit (403), welche dafür konfiguriert ist zu entscheiden, ob die von der VMSC ausgelöste Anforderung des intelligenten Netzwerkdienstes im internationalen Roaming ausgelöst ist;
eine Planungseinheit (402), welche für Folgendes konfiguriert ist: wenn die von der VMSC ausgelöste Anforderung des intelligenten Netzwerkdienstes im internationalen Roaming ausgelöst ist, Senden der von der VMSC ausgelösten Anforderung des intelligenten Netzwerkdienstes an die Zugriffsdienst-Verarbeitungsvorrichtung, so dass die Zugriffsdienst-Verarbeitungsvorrichtung eine temporäre Rufnummer zuweist; und wenn die Empfangseinheit die Anforderung des intelligenten Netzwerkdienstes für die temporäre Rufnummer empfängt, Senden der Anforderung des intelligenten Netzwerkdienstes für die temporäre Rufnummer an die Zugriffsdienst-Verarbeitungsvorrichtung, um einen intelligenten Netzwerkdienst auszulösen, an dem das mobile Endgerät teilnimmt, mit einer tatsächlich gewählten Nummer auszulösen, die der temporären Rufnummer entspricht;
wobei die Planungseinheit ferner dafür konfiguriert ist, die von der VMSC ausgelöste Anforderung des intelligenten Netzwerkdienstes zum Verarbeiten des intelligenten Netzwerkdienstes, an dem das mobile Endgerät teilnimmt, direkt an eine Verarbeitungsvorrichtung für intelligente Netzwerkdienste zu senden, wenn die von der VMSC ausgelöste Anforderung des intelligenten Netzwerkdienstes nicht im internationalen Roaming ausgelöst ist.

8. Dienstplanungsvorrichtung nach Anspruch 7, ferner umfassend:
eine Unterbrechungseinheit (404), welche dafür konfiguriert ist, eine Ruf-VERBINDEN-Meldung, welche die tatsächlich gewählte Nummer enthält und von der Zugriffsdienst-Verarbeitungsvorrichtung übermittelt ist, zu unterbrechen, wenn die Zugriffsdienst-Verarbeitungsvorrichtung die Anforderung des intelligenten Netzwerkdienstes für die temporäre Rufnummer empfängt, wobei die Planungseinheit ferner dafür konfiguriert ist, die temporäre Rufnummer in der Anforderung des intelligenten Netzwerkdienstes für die temporäre Rufnummer so zu modifizieren, dass sie die tatsächlich gewählte Nummer ist, und die modifizierte Anforderung des intelligenten Netzwerkdienstes zum Verarbeiten des intelligenten Netzwerkdienstes, an dem das mobile Endgerät teilnimmt, an die Verarbeitungsvorrichtung für intelligente Netzwerkdienste zu senden.

9. System zum Realisieren eines intelligenten Netzwerkdienstes, umfassend:
eine Zugriffsplattform auf intelligente Netzwerke (601), welche für Folgendes konfiguriert ist: Empfangen einer Anforderung eines intelligenten Netzwerkdienstes, die von einer besuchten Mobilfunk-Schaltzentrale, VMSC, eines mobilen Endgeräts ausgelöst ist; Bestimmen, ob die Anforderung des intelligenten Netzwerkdienstes im internationalen Roaming ausgelöst ist; und wenn die Anforderung des intelligenten Netzwerkdienstes nicht im internationalen Roaming ausgelöst ist, direktes Auslösen des intelligenten Netzwerkdienstes, an dem das mobile Endgerät teilnimmt; wenn die Anforderung des intelligenten Netzwerkdienstes im internationalen Roaming ausgelöst ist, Erzeugen einer temporären Rufnummer für einen internationalen Roaming-Ruf, welcher von dem mobilen Endgerät an der VMSC ausgelöst ist, und Speichern einer entsprechenden Beziehung zwischen der temporären Rufnummer und einer tatsächlich gewählten Nummer des internationalen Roaming-Rufs, wobei die temporäre Rufnummer einen Länder-Code eines Heimatlandes des mobilen Endgeräts umfasst; Zurücksenden der temporären Rufnummer an die VMSC, so dass die VMSC den internationalen Roaming-Ruf gemäß dem Länder-Code an eine Mobilfunk-Schaltzentrale in einem Heimatland des mobilen Endgeräts weiterleitet; Empfangen einer von der Mobilfunk-Schaltzentrale in einem Heimatland ausgelösten Anforderung des intelligenten Netzwerkdienstes für die temporäre Rufnummer; Erfassen der tatsächlich gewählten Nummer gemäß der temporären Rufnummer und Auslösen des intelligenten Netzwerkdienstes, an welchem das mobile Endgerät teilnimmt, mit der tatsächlich gewählten Nummer; und
eine Verarbeitungsvorrichtung für intelligente Netzwerke (602), welche dafür konfiguriert ist, gemäß dem Auslösen der Zugriffsplattform auf intelligente Netzwerke den intelligenten Netzwerkdienst, an dem das mobile Endgerät teilnimmt, dem mobilen Endgerät bereitzustellen.

10. System nach Anspruch 9, ferner umfassend:
die Mobilfunk-Schaltzentrale in einem Heimatland, welche für Folgendes konfiguriert ist: Empfangen des internationalen Roaming-Rufs, weitergeleitet von der VMSC gemäß dem Länder-Code in der temporären Rufnummer, wobei die temporäre Rufnummer ferner eine spezielle Kennung umfasst; und Auslösen der Anforderung des intelligenten Netzwerkdienstes für die temporäre Rufnummer und Senden der Anforderung des intelligenten Netzwerkdienstes an die Zugriffsplattform auf intelligente Netzwerke gemäß der speziellen Kennung.

## Revendications

1. Procédé pour mettre en oeuvre un service de réseau intelligent, le procédé comprenant les étapes consistant à :
recevoir (S101) une demande de service de réseau intelligent lancée depuis un centre de commutation mobile visité, VMSC, d'un terminal mobile ;
dès réception de la demande de service de réseau intelligent lancée depuis le VMSC, déterminer si la demande de service de réseau intelligent est lancée dans le cadre d'une itinérance internationale ; et, si la demande de service de réseau intelligent n'est pas lancée dans le cadre d'une itinérance internationale, lancer directement le service de réseau intelligent auquel le terminal mobile est abonné ;
si la demande de service de réseau intelligent est lancée dans le cadre d'une itinérance internationale, générer (S 102) un numéro appelant temporaire pour un appel en itinérance internationale par le terminal mobile au niveau du VMSC, et enregistrer une relation de correspondance entre le numéro appelant temporaire et un numéro effectivement appelé dans l'appel en itinérance internationale, le numéro appelant temporaire comprenant un indicatif de pays d'un pays de rattachement du terminal mobile ;
renvoyer (S103) le numéro appelant temporaire au VMSC, de sorte que le VMSC achemine l'appel en itinérance internationale vers un centre de commutation mobile dans un pays de rattachement du terminal mobile conformément à l'indicatif de pays ;
recevoir (S104) la demande de service de réseau intelligent lancée depuis le centre de commutation mobile dans un pays de rattachement pour le numéro appelant temporaire ; et
acquérir (S 105) le numéro effectivement appelé conformément au numéro appelant temporaire, et lancer un service de réseau intelligent auquel le terminal mobile est abonné avec le numéro effectivement appelé.

2. Procédé selon la revendication 1, dans lequel le numéro appelant temporaire comprend en outre un identificateur spécial, et le centre de commutation mobile dans un pays de rattachement lance une demande de service de réseau intelligent pour le numéro appelant temporaire conformément à l'identificateur spécial.

3. Procédé selon la revendication 1 ou 2, dans lequel l'étape consistant à lancer le service de réseau intelligent auquel le terminal mobile est abonné avec le numéro effectivement appelé comprend plus particulièrement l'étape consistant à :
modifier le numéro appelant temporaire dans la demande de service de réseau intelligent lancée depuis le centre de commutation mobile dans un pays de rattachement en le remplaçant par le numéro effectivement appelé, et transmettre la demande de service de réseau intelligent modifiée à un dispositif de traitement de service de réseau intelligent pour le traitement du service de réseau intelligent auquel le terminal mobile est abonné.

4. Système comprenant un dispositif de traitement de service d'accès (20), dans lequel le dispositif de traitement de service d'accès (20) comprend :
une première unité de réception (201), configurée pour recevoir une demande de service de réseau intelligent pour un appel en itinérance internationale ;
une unité de génération (202), configurée pour : générer un numéro appelant temporaire pour l'appel en itinérance internationale, le numéro appelant temporaire comprenant un indicatif de pays d'un pays de rattachement d'un terminal mobile ; et enregistrer une relation de correspondance entre le numéro appelant temporaire et un numéro effectivement appelé de l'appel en itinérance internationale ;
une unité de transmission (203), configurée pour transmettre le numéro appelant temporaire à un centre de commutation mobile visité, VMSC, du terminal mobile, de sorte que le VMSC achemine l'appel en itinérance internationale vers un centre de commutation mobile dans un pays de rattachement du terminal mobile conformément à l'indicatif de pays ;
une deuxième unité de réception (204), configurée pour recevoir une demande de service de réseau intelligent lancée depuis le centre de commutation mobile dans un pays de rattachement du terminal mobile pour le numéro appelant temporaire ; et
une unité de traitement (205), configurée pour acquérir le numéro effectivement appelé conformément au numéro appelant temporaire, et lancer un service de réseau intelligent auquel le terminal mobile est abonné avec le numéro effectivement appelé.

5. Dispositif de traitement de service d'accès selon la revendication 4, dans lequel l'unité de traitement comprend plus particulièrement :
un module d'acquisition (2051), configuré pour acquérir le numéro effectivement appelé conformément au numéro appelant temporaire ; et
un module de lancement (2052), configuré pour modifier le numéro appelant temporaire dans la demande de service de réseau intelligent pour le remplacer par le numéro effectivement appelé, et transmettre la demande de service de réseau intelligent modifiée à un dispositif de traitement de service de réseau intelligent pour le traitement du service de réseau intelligent auquel le terminal mobile est abonné.

6. Dispositif de traitement de service d'accès selon la revendication 4, dans lequel l'unité de traitement comprend plus particulièrement :
un module d'acquisition (2051), configuré pour acquérir le numéro effectivement appelé conformément au numéro appelant temporaire ; et
un module de lancement (2052), configuré pour fournir un message d'ETABLISSEMENT d'appel contenant le numéro effectivement appelé à un dispositif de programmation de service, de sorte que le dispositif de programmation de service modifie le numéro appelant temporaire dans la demande de service de réseau intelligent pour le remplacer par le numéro effectivement appelé, et transmette la demande de service de réseau intelligent modifiée à un dispositif de traitement de service de réseau intelligent pour le traitement du service de réseau intelligent auquel le terminal mobile est abonné.

7. Système comprenant un dispositif de programmation de service (40), le dispositif de programmation de service (40) comprenant :
une unité de réception (401), configurée pour recevoir une demande de service de réseau intelligent lancée depuis un centre de commutation mobile visité, VMSC, d'un terminal mobile et, dès qu'un dispositif de traitement de service d'accès renvoie un numéro appelant temporaire au VMSC, recevoir une demande de service de réseau intelligent lancée depuis un centre de commutation mobile dans un pays de rattachement du terminal mobile pour le numéro appelant temporaire ; et
une unité d'évaluation (403), configurée pour évaluer si la demande de service de réseau intelligent lancée depuis le VMSC est lancée dans le cadre d'une itinérance internationale ;
une unité de programmation (402), configurée pour : si la demande de service de réseau intelligent lancée depuis le VMSC est lancée dans le cadre d'une itinérance internationale, transmettre la demande de service de réseau intelligent lancée depuis le VMSC au dispositif de traitement de service d'accès, de sorte que le dispositif de traitement de service d'accès attribue un numéro appelant temporaire ; et, lorsque l'unité de réception reçoit la demande de service de réseau intelligent pour le numéro appelant temporaire, transmettre la demande de service de réseau intelligent pour le numéro appelant temporaire au dispositif de traitement de service d'accès, de manière à lancer un service de réseau intelligent auquel le terminal mobile est abonné avec un numéro effectivement appelé correspondant au numéro appelant temporaire ; l'unité de programmation étant configurée en outre pour transmettre directement la demande de service de réseau intelligent lancée depuis le VMSC à un dispositif de traitement de service de réseau intelligent pour le traitement du service de réseau intelligent auquel le terminal mobile est abonné si la demande de service de réseau intelligent lancée depuis le VMSC n'est pas lancée dans le cadre d'une itinérance internationale.

8. Dispositif de programmation de service selon la revendication 7, comprenant en outre :
une unité d'interception (404), configurée pour intercepter un message d'ETABLISSEMENT d'appel contenant le numéro effectivement appelé fourni par le dispositif de traitement de service d'accès lorsque le dispositif de traitement de service d'accès reçoit la demande de service de réseau intelligent pour le numéro appelant temporaire,
l'unité de programmation étant configurée en outre pour modifier le numéro appelant temporaire dans la demande de service de réseau intelligent pour le remplacer par le numéro effectivement appelé, et transmettre la demande de service de réseau intelligent modifiée au dispositif de traitement de service de réseau intelligent pour le traitement du service de réseau intelligent auquel le terminal mobile est abonné.

9. Système pour mettre en oeuvre un service de réseau intelligent, comprenant :
une plateforme d'accès de réseau intelligent (601), configurée pour : recevoir une demande de service de réseau intelligent lancée depuis un centre de commutation mobile visité, VMSC, d'un terminal mobile ; déterminer si la demande de service de réseau intelligent est lancée dans le cadre d'une itinérance internationale ; et, si la demande de service de réseau intelligent n'est pas lancée dans le cadre d'une itinérance internationale, lancer directement le service de réseau intelligent auquel le terminal mobile est abonné ; si la demande de service de réseau intelligent est lancée dans le cadre d'une itinérance internationale, générer un numéro appelant temporaire pour un appel en itinérance internationale émis par le terminal mobile au niveau du VMSC, et enregistrer une relation de correspondance entre le numéro appelant temporaire et un numéro effectivement appelé de l'appel en itinérance internationale, le numéro appelant temporaire comprenant un indicatif de pays d'un pays de rattachement du terminal mobile ; renvoyer le numéro appelant temporaire au VMSC, de sorte que le VMSC achemine l'appel en itinérance internationale vers un centre de commutation mobile dans un pays de rattachement du terminal mobile conformément à l'indicatif de pays ; recevoir une demande de service de réseau intelligent lancée depuis le centre de commutation mobile dans un pays de rattachement pour le numéro appelant temporaire ; acquérir le numéro effectivement appelé conformément au numéro appelant temporaire, et lancer le service de réseau intelligent auquel le terminal mobile est abonné avec le numéro effectivement appelé ; et
un dispositif de traitement de réseau intelligent (602), configuré pour procurer au terminal mobile le service de réseau intelligent auquel le terminal mobile est abonné conformément au lancement de la plateforme d'accès de réseau intelligent.

10. Système selon la revendication 9, comprenant en outre :
le centre de commutation mobile dans un pays de rattachement, configuré pour : recevoir l'appel en itinérance internationale acheminé par le VMSC conformément à l'indicatif de pays dans le numéro appelant temporaire, le numéro appelant temporaire comprenant en outre un identificateur spécial ; et lancer la demande de service de réseau intelligent pour le numéro appelant temporaire et transmettre la demande de service de réseau intelligent à la plateforme d'accès de réseau intelligent conformément à l'identificateur spécial.
